# FASCICULE DE BREVET EUROPEEN

(11) **EP 0 603 076 B1**
(45) Date de publication et mention de la délivrance du brevet: **10.03.1999**
(21) Numéro de dépôt: 93403058.6
(22) Date de dépôt: 16.12.1993
(51) Int. Cl.: G01N 35/10, B01L 3/02

(54) **Dispositif de manipulation d'une seringue et automate d'analyse biologique comportant un tel dispositif**
Vorrichtung zur Handhabung einer Spritze, und biologischer Analyseautomat, eine solche Vorrichtung enthaltend
Syringe operating device, and automatic biological analyser incorporating such a device

(30) Priorité: 18.12.1992 FR 9215366
(43) Date de publication de la demande: 22.06.1994
(73) Titulaire: PASTEUR SANOFI DIAGNOSTICS, 92430 Marnes La Coquette (FR)
(72) Inventeur: Bajard, Jean, F-67370 Griesheim Sur Sousslel (FR)
(74) Mandataire: Habasque, Etienne Joel Jean-François

(56) Documents cités:
- EP-A- 0 144 240
- EP-A- 0 226 867
- FR-A- 2 358 651
- US-A- 3 991 616
- US-A- 4 249 419

## Description

La présente invention concerne un dispositif de manipulation d'une seringue pour le pompage ou la distribution de liquide, notamment pour automate d'analyse biologique et un automate d'analyse biologique comportant un tel dispositif.

Les automates d'analyse utilisés notamment en biologie clinique sont adaptés pour réaliser des analyses au cours desquelles il est fréquent que des échantillons provenant de patients soient mis en contact successivement avec plusieurs réactifs avec lesquels ils sont susceptibles de se combiner directement ou indirectement.

Les volumes respectifs des échantillons et des réactifs interviennent dans l'élaboration des résultats des analyses et pour cette raison, il est nécessaire que ces volumes soient préparés avec la meilleure précision possible, leur mise en contact s'effectuant dans une cuve d'analyse telle que par exemple un tube à essais ou une cupule d'une plaque de microtitration.

Ces volumes sont fréquemment très petits, par exemple de l'ordre de quelques microlitres à quelques centaines de microlitres, ce qui rend extrêmement difficile leur distribution précise et reproductible dans les cuves d'analyse.

Les distributions des réactifs doivent de plus être réalisées dans des conditions permettant d'éviter toute contamination susceptible de fausser les résultats de ces analyses.

On entend par contamination, la pollution involontaire d'un liquide pendant sa manipulation par des traces d'un autre liquide ayant été en contact précédemment avec les mêmes organes de manipulation.

Pour éviter ces contaminations, on peut soit intercaler entre deux manipulations successives une séquence de rinçage appropriée par un liquide neutre et non contaminant, constitué par exemple d'eau distillée, pour éliminer toute trace de contaminant, soit plus radicalement éviter de faire passer dans les mêmes organes de manipulation successivement des réactifs susceptibles de se contaminer mutuellement et par conséquent avoir autant de circuits de distribution distincts qu'il y a de réactifs à distribuer et devant être protégés contre les contaminations.

Pour manipuler automatiquement les différents liquides concernés, c'est à dire les réactifs et les échantillons, dans de telles conditions opératoires, on peut utiliser un organe de pompage formé d'un ensemble regroupant une seringue de précision en verre à piston dit motorisé, c'est à dire relié à des moyens motorisés de déplacement, et une vanne à trois voies.

Cette vanne est reliée par une voie à la seringue et par deux autres voies, à un réservoir de liquide pousseur ou de poussage, tel que par exemple de l'eau distillée, et à une tuyauterie comportant à une extrémité, une aiguille de prélèvement et de distribution.

La seringue et l'ensemble du circuit de distribution associé sont préalablement remplis de liquide pousseur.

Pour distribuer un réactif avec cet ensemble, on prélève le réactif dans un réservoir à l'aide de l'aiguille, ce réactif pénétrant alors dans la tuyauterie reliée à la vanne et étant le plus souvent séparé du liquide pousseur par une bulle d'air créée à cet effet, par déplacement du piston de la seringue dans un sens, puis on peut le distribuer à partir de l'aiguille par déplacement du piston de la seringue dans l'autre sens.

Les volumes mis en jeu sont définis avec d'autant plus de précision que les mouvements du piston sont finement contrôlés pour un calibre de seringue donné.

Ainsi, le piston peut être déplacé par un mécanisme à vis-écrou, dans lequel le piston est solidaire de l'écrou, celui-ci étant bloqué en rotation mais déplaçable en translation tandis que la vis est entraînée en rotation par exemple par un moteur électrique reversible, ce qui engendre un mouvement linéaire du piston dans le corps de seringue.

Il est possible d'augmenter la précision d'un tel ensemble en diminuant le calibre de la seringue, c'est à dire sa section, mais en contrepartie, le volume total de la seringue étant diminué, la distribution de liquide est plus longue, ce qui entraîne, lorsque l'ensemble est intégré à un automate d'analyse, une limitation de la vitesse de travail et de la capacité de celui-ci.

De plus, après avoir distribué un premier réactif, il est nécessaire de rincer l'aiguille et la tuyauterie, grâce au liquide de poussage, en mettant en oeuvre la vanne à trois voies, afin de décontaminer la tuyauterie avant de manipuler un autre réactif.

On conçoit que ces opérations sont relativement lentes et limitent considérablement la vitesse de travail de l'ensemble du dispositif.

Avec un tel dispositif à seringue, il est également possible de supprimer le liquide de poussage et de remplir tout le circuit de distribution, y compris la seringue, avec un réactif à distribuer, ce qui lui permet de réaliser des distributions plus rapides en remplissant d'abord d'un seul coup toute la seringue et en la vidant ensuite par fractions.

Ce mode de fonctionnement convient très bien par exemple à la distribution d'un réactif dans les différentes cupules d'une plaque de microtitration, mais l'inconvénient de ce dispositif est le coût élevé de l'appareillage mis en oeuvre lorsqu'il y a plusieurs réactifs à distribuer, puisque pour chacun d'eux il est nécessaire de disposer d'un ensemble de distribution complet, c'est à dire d'une seringue avec une motorisation individuelle associée, d'une vanne et d'une tuyauterie, qui lui soient exclusivement réservées.

Par contre, il n'y a pas de contamination inter-réactifs, mais cet avantage et celui de la rapidité qui en découlent, du fait qu'aucun rinçage n'est alors nécessaire, sont acquis au prix d'un coût global qui se révèle souvent prohibitif.

Ce dispositif est peu utilisé en pratique pour cette raison.

Une autre solution offrant les mêmes avantages à moindre coût a été mise en oeuvre de façon classique. Cette solution consiste à utiliser au lieu d'une seringue en verre, une seringue en matière plastique de faible coût constituant un élément à usage unique et jetable et qui comporte un embout effilé faisant office d'aiguille de distribution.

On associe alors à chaque réactif une telle seringue et comme celle-ci constitue à elle seule l'intégrité du circuit de fluide avec lequel le réactif se trouve en contact, il ne peut y avoir de contamination inter-réactifs.

Pour manoeuvrer à tour de rôle l'une ou l'autre de ces seringues, qui sont réunies par exemple sur un carrousel, on utilise un dispositif de motorisation unique comprenant des moyens de préhension permettant la saisie d'une seringue sélectionnée en agrippant séparément le corps et le piston de cette seringue.

Une fois ces opérations de saisie réalisées, la seringue se trouve alors couplée à la motorisation et l'ensemble de manipulation se déplace verticalement pour plonger l'embout effilé de la seringue dans un flacon de réactif correspondant, pour permettre le remplissage de la seringue, puis remonte pour sortir l'embout de la seringue du flacon et se déplace jusqu'à la verticale du ou des emplacements où la seringue doit distribuer son contenu par fractions.

Cet ensemble permet de n'utiliser qu'une seule motorisation pour toutes les seringues, ce qui en réduit considérablement le coût.

Cependant, la mécanisation des opérations effectuées est assez complexe, notamment pour ce qui concerne la préhension du corps de la seringue et celle du piston du fait de la nécessité de prévoir des organes mobiles les uns par rapport aux autres et cependant déplaçables verticalement et transversalement en bloc.

De plus, ce dispositif présente une précision inférieure à celle obtenue avec les seringues de précision en verre, notamment en raison des frottements entre piston et corps de seringue.

Cet effet peut être compris en rappelant que même avec une seringue de précision en verre, il devient pratiquement impossible de conserver une précision suffisante si l'on souhaite distribuer des fractions représentant moins de 1% du volume total de la seringue et en considérant que cette limitation provient d'abord de la précision requise dans le contrôle de la course du piston.

En effet, la course totale utile du piston d'une seringue est par exemple de l'ordre de 60 mm, ce qui fait que pour distribuer un volume égal au 1/100 du volume total de la seringue, le déplacement du piston doit être de l'ordre de 0,6 mm et si l'on veut que la précision soit de 1% de la fraction distribuée, il faut alors contrôler le déplacement du piston à 0,06 mm près, ce qui est extrêmement difficile.

L'une des causes principales de cette difficulté est que le frottement du piston contre le corps de la seringue rend plus difficile le contrôle des très petits déplacements, qui sont alors extrêmement aléatoires, car ils deviennent sensibles aux petites déformations élastiques subies par les organes mis en jeu.

Il faut à cet égard considérer que la zone de contact entre le piston et le corps de la seringue doit être étanche, de sorte que ces éléments doivent présenter une certaine élasticité.

Lorsque le mouvement du piston doit s'amorcer a partir d'une position de repos dans laquelle piston et corps de seringue sont en contact et immobiles l'un par rapport à l'autre, la résistance au déplacement linéaire du piston est régie au départ par un frottement statique relativement élevé, puis, c'est à dire lorsque le mouvement a commencé, par un frottement dynamique glissant qui est beaucoup plus faible que le frottement statique.

Ainsi, au départ d'un mouvement, les pièces sont soumises à des contraintes plus élevées qui se libèrent plus ou moins brutalement dès que la résistance initiale a été dépassée, ce qui produit à l'échelle microscopique, une sorte de bref à-coup initial dans le déplacement linéaire du piston. Ce phénomène de caractère plus ou moins aléatoire, a une incidence d'autant plus importante sur la précision du déplacement du piston, et donc de la quantité de liquide distribuée, qu'il est plus court et que l'élasticité des éléments mis en jeu est plus élevée.

Avec des corps de seringue en matière plastique, ce phénomène est plus accentué qu'avec des corps de seringue en verre et il en est de même pour leurs pistons respectifs.

C'est ainsi que s'expliquent les limitations de précisions signalées précédemment et observées avec les dispositifs de pompage utilisant notamment des seringues à usage unique en matière plastique.

Le document US-A-3991616 décrit un dispositif de manipulation d'une seringue selon la préambule de la revendication 1, et dans lequel le piston de la seringue est entraîné en rotation par rapport au corps de cette dernière.

Le but de l'invention est de résoudre les problèmes mentionnés précédemment en proposant un dispositif de manipulation d'une seringue pour le pompage ou la distribution de liquide, notamment pour automate d'analyse biologique, qui soit simple, fiable et qui permette de délivrer de petits volumes de liquide avec une très bonne précision.

A cet effet, l'invention a pour objet un dispositif de manipulation d'une seringue pour le pompage ou la distribution de liquide, notamment pour automate d'analyse biologique, dans lequel la seringue comporte un corps et un piston déplaçable dans le corps et le dispositif comporte des premiers moyens de préhension du corps de la seringue, des seconds moyens de préhension du piston de la seringue et des moyens de déplacement des moyens de préhension les uns par rapport aux autres pour amener le piston à se déplacer dans le corps de seringue afin de pomper ou distribuer du liquide, caractérisé en ce que les moyens de déplacement sont formés par des moyens de déplacement du corps et du piston selon un mouvement relatif hélicoïdal.

Avantageusement, les moyens de déplacement comprennent des moyens d'entraînement en rotation des premiers moyens de préhension et donc du corps de seringue et des moyens d'entraînement en translation des seconds moyens de préhension et donc du piston de seringue par rapport aux premiers moyens de préhension et donc au corps de seringue.

Les moyens d'entraînement en translation peuvent être constitués par un mécanisme à vis-écrou interposé entre les premiers et seconds moyens de préhension.

Selon un autre aspect, l'invention a également pour objet un automate d'analyse biologique comportant un tel dispositif.

L'invention sera mieux comprise à l'aide de la description qui va suivre, donnée uniquement à titre d'exemple et faite en se référant aux dessins annexés, sur lesquels :

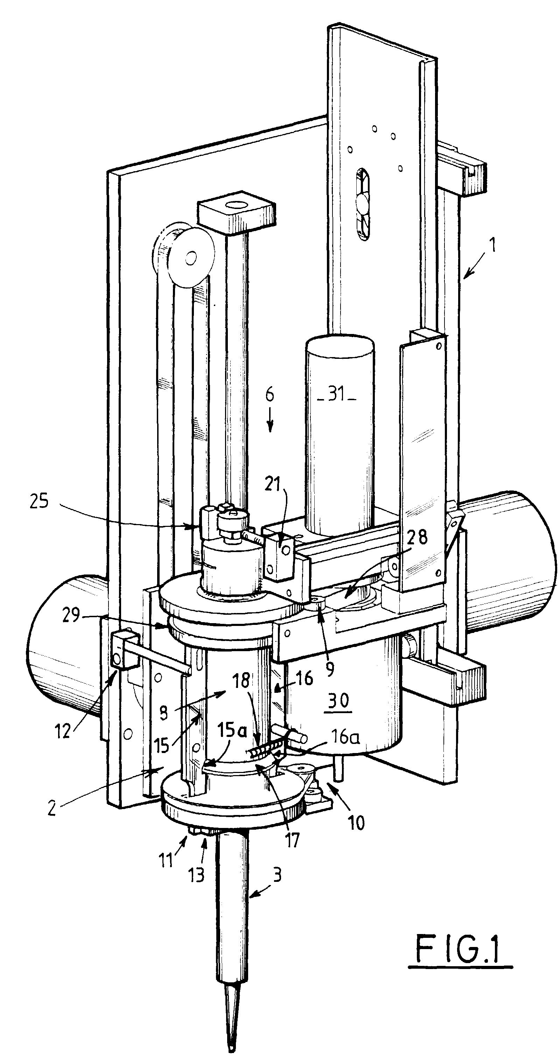

- la Fig.1 représente une vue de face d'un dispositif de manipulation selon l'invention;
- la Fig.2 représente une vue de derrière d'un dispositif de manipulation selon l'invention;

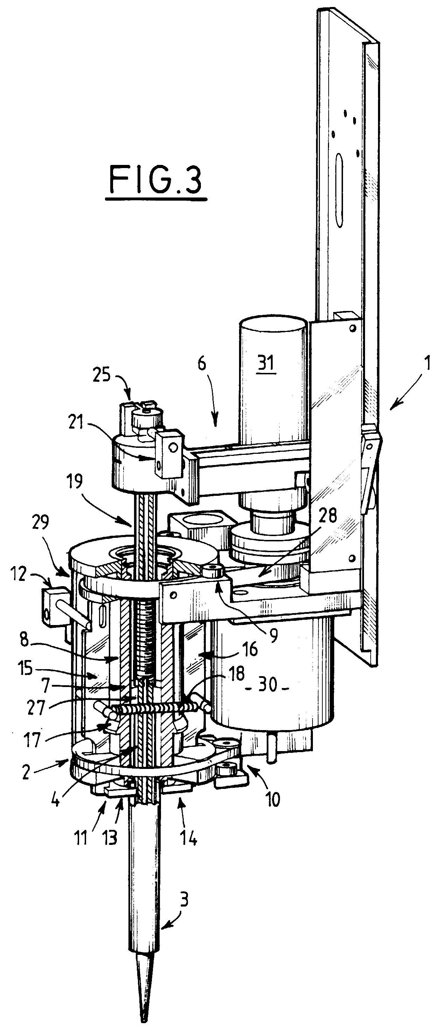

- la Fig.3 représente une vue de face d'un dispositif de manipulation selon l'invention, avec une portion arrachée montrant un mécanisme à vis-écrou interposé entre les premiers et seconds moyens de préhension;
- la Fig.4 représente une vue à échelle agrandie d'une partie du dispositif de manipulation selon l'invention représenté sur la Fig.3;
- la Fig.5 illustre le fonctionnement de premiers moyens de saisie d'un corps de seringue, entrant dans la constitution d'un dispositif selon l'invention; et
- les Fig.6 et 7 représentent des vues en coupe illustrant le fonctionnement de seconds moyens de saisie d'un piston de seringue entrant dans la constitution d'un dispositif selon l'invention.

Un dispositif de manipulation selon l'invention peut être intégré dans un automate d'analyse biologique de structure classique par exemple du type BEP III commercialisé par la société Behring.

Ces automates d'analyse comprennent de façon classique une embase de support sur laquelle sont prévus par exemple un carrousel de réception de différents éléments, tels que des seringues et des flacons contenant des liquides à distribuer. Cette embase de support est également munie d'au moins un bras de support d'un dispositif de manipulation adapté pour réaliser un certain nombre d'opérations, telles que la saisie d'une seringue, la manipulation de celle-ci pour son remplissage, le déplacement de celle-ci par exemple en direction d'une zone de travail dans laquelle est disposée une plaque de microtitration et la distribution de liquide à partir de la seringue, dans des cupules de cette plaque, par déplacement du piston dans le corps de seringue.

On conçoit alors que les dispositifs de manipulation utilisés dans ces automates comprennent des premiers moyens de préhension du corps de la seringue, des seconds moyens de préhension du piston de la seringue et des moyens de déplacement des moyens de préhension les uns par rapport aux autres, pour amener le piston à se déplacer dans le corps de seringue afin de pomper ou de distribuer du liquide.

Alors que dans l'état de la technique les moyens de déplacement des moyens de préhension les uns par rapport aux autres sont adaptés pour provoquer un déplacement linéaire du piston dans le corps de seringue, les moyens de déplacement entrant dans la constitution du dispositif de manipulation selon l'invention, sont formés par des moyens de déplacement du corps et du piston selon un mouvement relatif hélicoïdal.

Cette caractéristique permet d'améliorer la précision du dispositif de manipulation en éliminant l'effet d'à-coup décrit précédemment en déplaçant le piston par rapport au corps de seringue, non plus selon un mouvement linéaire, mais selon un mouvement hélicoïdal, c'est à dire en imprimant un mouvement de rotation relatif entre le corps de seringue et le piston pendant que ce piston se déplace à l'intérieur du corps de seringue.

L'intérêt de ceci peut être compris en prenant un exemple dans lequel le piston avance de 1mm par tour par rapport au corps de seringue.

Pour avancer le piston de 0,6 mm comme dans le cas décrit précédemment, il est nécessaire d'avoir une rotation relative entre corps et piston de 0,6 x 360°, c'est à dire 216°. On constate alors que pour contrôler cette rotation au centième, il est nécessaire de la contrôler à environ 2°, ce qui est relativement facile notamment en utilisant un moteur pas à pas.

Cette amélioration de précision est due au fait qu'un déplacement en rotation de l'ordre de 2° suffit à passer du frottement initial statique au frottement glissant entre piston et corps et qu'il n'en résulte aucun effet aléatoire sensible au niveau du déplacement linéaire relatif entre piston et corps.

On a représenté sur les figures, un exemple de réalisation d'un dispositif de manipulation pouvant être intégré dans un automate d'analyse biologique.

Pour des raisons de clarté, seul ce dispositif de manipulation a été représenté, le reste de l'automate pouvant être de structure classique.

Ce dispositif comporte une structure de support désignée de façon générale par la référence 1 et fixée par exemple à l'extrémité d'un bras de support entrant dans la constitution de l'automate.

Sur cette structure de support, sont disposés des premiers moyens 2 de préhension du corps de la seringue 3 et des seconds moyens 4 de préhension du piston 5 de la seringue.

Des moyens de déplacement des moyens de préhension les uns par rapport aux autres, pour amener le piston a se déplacer dans le corps de seringue afin de pomper ou distribuer du liquide, sont également prévus.

En fait, ces moyens de déplacement comprennent des moyens 6 d'entraînement en rotation des premiers moyens de préhension 2 et donc du corps 3 de seringue et des moyens 7 d'entraînement en translation des seconds moyens de préhension 4 et donc du piston 5 de seringue par rapport aux premiers moyens de préhension et donc au corps 3 de seringue.

Comme cela sera décrit plus en détail par la suite, ces moyens d'entraînement en translation 7 comprennent par exemple un mécanisme à vis-écrou interposé entre les premiers et seconds moyens de préhension.

Dans l'exemple de réalisation représenté sur ces figures, les premiers moyens de préhension du corps de seringue désignés par la référence générale 2, comprennent en fait un premier organe tubulaire 8 rotatif par rapport à la structure de support 1 et associé à des moyens de guidage sur cette structure de support et constitués par exemple par des ensembles à galets 9 et 10 disposés dans la partie supérieure et dans la partie inférieure de cet organe.

Ces galets sont fixés sur la structure de support et permettent de maintenir cet organe tubulaire constituant les premiers moyens de préhension en position tout en autorisant une rotation de celui-ci par rapport au reste de la structure de support.

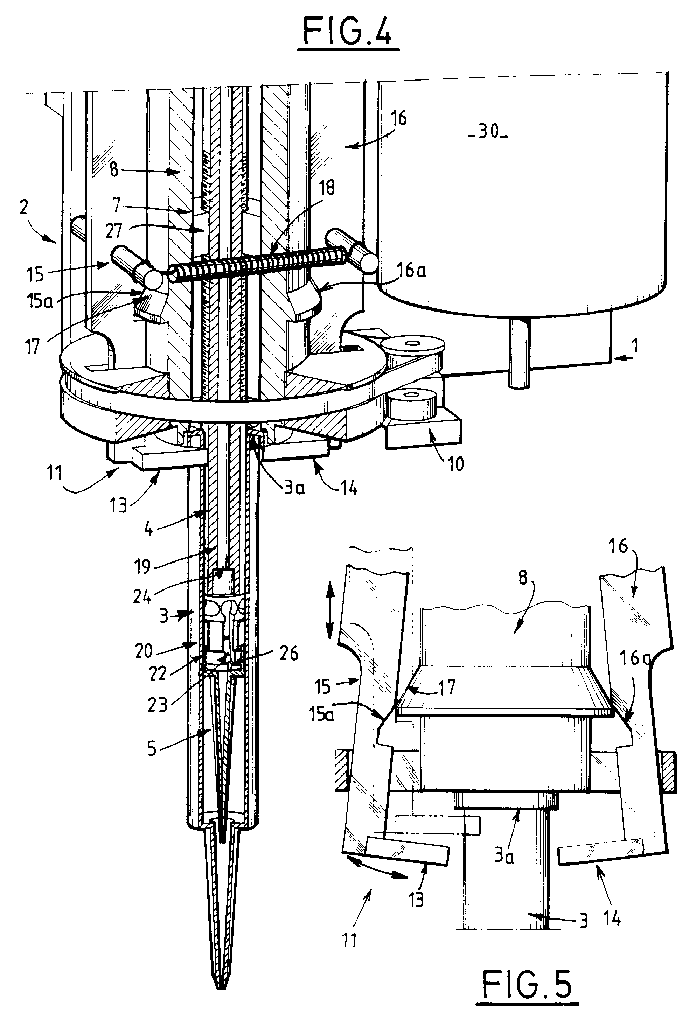

A son extrémité inférieure, cet organe tubulaire rotatif comporte des premiers moyens 11 de saisie du corps de seringue, ces moyens de saisie étant reliés à des premiers moyens de manoeuvre désignés par la référence générale 12 sur ces figures, permettant de déplacer ces moyens de saisie 11 entre une position escamotée permettant leur passage autour du corps de seringue et une position active de saisie du corps de seringue (voir Fig.5).

Ces moyens de saisie comprennent par exemple une pince à deux mors 13 et 14 disposés en regard l'un de l'autre et reliés chacun à une tige de support 15,16. Ces tiges de support sont disposées de part et d'autre du premier organe tubulaire 8 et sont montées déplaçables dans une direction générale verticale le long de cet organe tubulaire par les moyens de manoeuvre 12 entre la position active de saisie du corps de seringue et plus particulièrement d'un rebord 3a de celui-ci et la position escamotée.

On notera à cet égard que le premier organe tubulaire 8 peut comporter une nervure circulaire 17 en forme de rampe adaptée pour coopérer avec des portions de forme complémentaire 15a et 16a des tiges de support pour provoquer un écartement de ces tiges de l'organe tubulaire et donc un écartement des mors 13 et 14 des moyens de saisie 11 vers la position escamotée, lorsque ces tiges de support sont déplacées vers le bas par les premiers moyens de manoeuvre 12.

Des moyens élastiques constitués par exemple par un ressort 18 dont les extrémités sont reliées aux deux tiges de support 15 et 16, permettent de solliciter celles-ci en position active de saisie dans laquelle les mors 13 et 14 sont rapprochés lorsque les premiers moyens de déplacement 12 ne sont pas activés.

Ces moyens de déplacement comprennent quant à eux des moyens de type classique comportant des broches de déplacement vertical des tiges de support correspondantes.

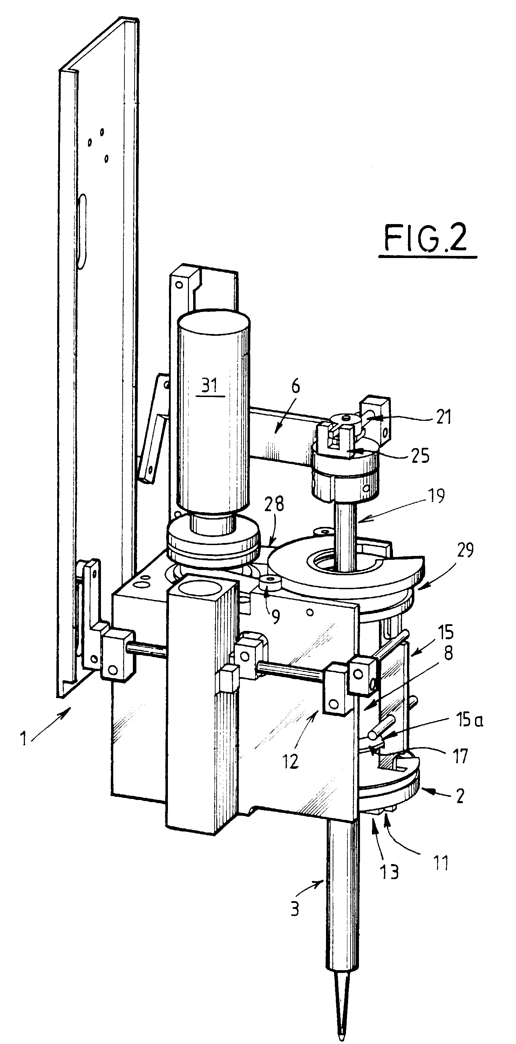

Ces broches peuvent être actionnées par tout organe approprié, tel que par exemple par un bras de levier comme on peut le voir sur ces figures et en particulier sur la Fig.2.

Les seconds moyens de préhension désignés par la référence générale 4 sur ces figures, adaptés pour assurer la préhension du piston 5 de la seringue, sont quant à eux montés déplaçables en translation dans ce premier organe tubulaire 8 des premiers moyens de préhension et sont bloqués en rotation par rapport au reste du dispositif.

Avantageusement, ces seconds moyens de préhension comprennent également un second organe tubulaire 19 comportant à son extrémité inférieure des seconds moyens de saisie 20 du piston de seringue, ces seconds moyens de saisie étant reliés à des seconds moyens de manoeuvre désignés par la référence générale 21 sur ces figures.

Avantageusement, ces seconds moyens de saisie comprennent un mandrin 22 expansible de façon élastique sous l'action d'une tête d'expansion 23 prévue à l'extrémité inférieure d'une tige de manoeuvre 24 déplaçable dans le second organe tubulaire 19 et dont l'extrémité supérieure est reliée aux seconds moyens de manoeuvre 21.

Cette extrémité supérieure de la tige 24 est également reliée à des moyens 25 de détection de la position des seconds moyens de saisie 20 par rapport au piston 5 de la seringue.

En effet, le mandrin expansible 22 est adapté pour s'engager dans un évidement 26 du piston 5 et est expansible dans celui-ci par remontée de la tête d'expansion 23 dans le mandrin 22 sous l'action des seconds moyens de manoeuvre 21, par l'intermédiaire de la tige de manoeuvre 24.

Les moyens de détection 25 sont donc interposés entre l'extrémité supérieure de la tige de manoeuvre 24 et le second organe tubulaire 19 pour détecter la venue en butée de la tête d'expansion 23 contre le piston afin de permettre une activation des seconds moyens de manoeuvre comme cela sera décrit plus en détail par la suite.

Les moyens de détection de position peuvent être constitués par tout organe approprié, de même que les seconds moyens de manoeuvre.

Les seconds moyens de manoeuvre peuvent en effet présenter une structure à base de broche de manoeuvre et de bras de levier analogue à celle des premiers moyens de manoeuvre.

Bien entendu, tout autre mode de réalisation de ces moyens de manoeuvre peut être envisagé.

C'est ainsi par exemple que des moyens élastiques, tels qu'un ressort, de sollicitation de la tige en position haute d'expansion du mandrin peuvent être prévus, les moyens de déplacement étant alors activés pour provoquer un déplacement vers le bas de la tige et donc une rétraction du mandrin.

Ainsi qu'on l'a indiqué précédemment, le mécanisme à vis-écrou de déplacement en translation des seconds moyens de préhension par rapport aux premiers moyens de préhension peut être interposé entre ceux-ci et plus particulièrement entre les premier et second organes tubulaires 8 et 19.

Dans le mode de réalisation représenté sur ces figures, l'écrou 27 du mécanisme à vis-écrou est solidaire du premier organe tubulaire 8 tandis que la surface externe du second organe tubulaire 19 est filetée.

Cependant, et selon un autre mode de réalisation, cet écrou du mécanisme à vis-écrou peut également être solidaire du second organe tubulaire 19 et dans ce cas, c'est la surface interne du premier organe tubulaire 8 qui est taraudée.

Enfin, les moyens d'entraînement en rotation des premiers moyens de préhension, c'est à dire du premier organe tubulaire 8, peuvent comporter au moins un moteur électrique réversible dont l'arbre de sortie est relié à ceux-ci par des moyens de transmission.

Comme cela est représenté sur ces figures, ces moyens de transmission peuvent comporter au moins une courroie 28 par exemple associée à une couronne d'entraînement 29 des premiers moyens de préhension et en particulier du premier organe tubulaire 8 et à un arbre de sortie d'au moins un moteur électrique.

En effet, le mouvement de rotation du premier organe tubulaire peut être imprimé par au moins un moteur électrique associé à cette courroie.

Dans l'exemple de réalisation représenté sur ces figures, les moyens d'entraînement en rotation des premiers moyens de préhension c'est à dire du premier organe tubulaire 8, comprennent deux moteurs électriques réversibles désignés par les références 30 et 31, dont l'un 31 est un moteur à rotation continue de déplacement rapide de ces moyens de préhension activé par exemple en phase d'approche ou d'écartement des seconds moyens de préhension du piston de la seringue et dont l'autre est un moteur pas à pas 30 activé par exemple en phase de déplacement du piston par les seconds moyens de préhension lorsque ceux-ci sont en position active d'accrochage.

Bien entendu, d'autres modes de réalisation de ces moyens d'entraînement peuvent être envisagés.

Le fonctionnement de ce dispositif est le suivant :

Lorsque l'automate d'analyse est activé pour venir saisir une seringue sélectionnée, par exemple dans un logement déterminé d'un carrousel, le bras de support du dispositif de manipulation représenté est déplacé de manière à être situé au-dessus de cette seringue.

Dans cette position initiale, les seconds moyens de préhension 4 sont en position haute dans les premiers moyens de préhension 2, les seconds moyens de saisie 20 du piston 5 de la seringue sont en position rétractée et les moyens de manoeuvre 12 des premiers moyens de saisie 11 du corps de seringue ne sont pas activés, de sorte que les mors 13 et 14 de la pince de ceux-ci sont en position rapprochée sous l'effet des moyens élastiques 18.

Lorsque ce dispositif est en regard de la seringue sélectionnée, la première opération consiste à activer les premiers moyens de manoeuvre 12 pour que ceux-ci déplacent vers le bas les tiges de support 15,16 à l'extrémité inférieure desquelles sont fixés les mors 13 et 14.

On conçoit alors (Fig.5) que lors de ce déplacement vers le bas des tiges de support, les portions de formes complémentaires 15a et 16a de ces tiges de support, viennent en appui sur la nervure en rampe 17 du premier organe tubulaire 8, ce qui provoque leur écartement de ce premier organe tubulaire et donc l'écartement des mors 13 et 14. Le bras de support de l'automate est alors abaissé de manière que les mors viennent saisir le corps de seringue en passant sous le rebord 3a de celui-ci.

Une fois cette saisie effectuée, les premiers moyens de manoeuvre 12 sont relâchés de sorte que les tiges de support 15,16 remontent le long du premier organe tubulaire 8 sous l'effet conjugué des portions de formes complémentaires 15a, 16a des tiges de support, de la nervure 17 et du ressort 18, pour serrer le corps de seringue contre le premier organe tubulaire 8.

Une fois cette opération effectuée, le moteur 31 à rotation continue est activé de manière à entraîner en rotation le premier organe tubulaire 8.

Cette mise en rotation de l'organe tubulaire 8 provoque par l'intermédiaire du mécanisme à vis-écrou 7 interposé entre ce premier organe tubulaire et le second organe tubulaire, un déplacement en translation de ce dernier vers le bas, dans le premier organe tubulaire.

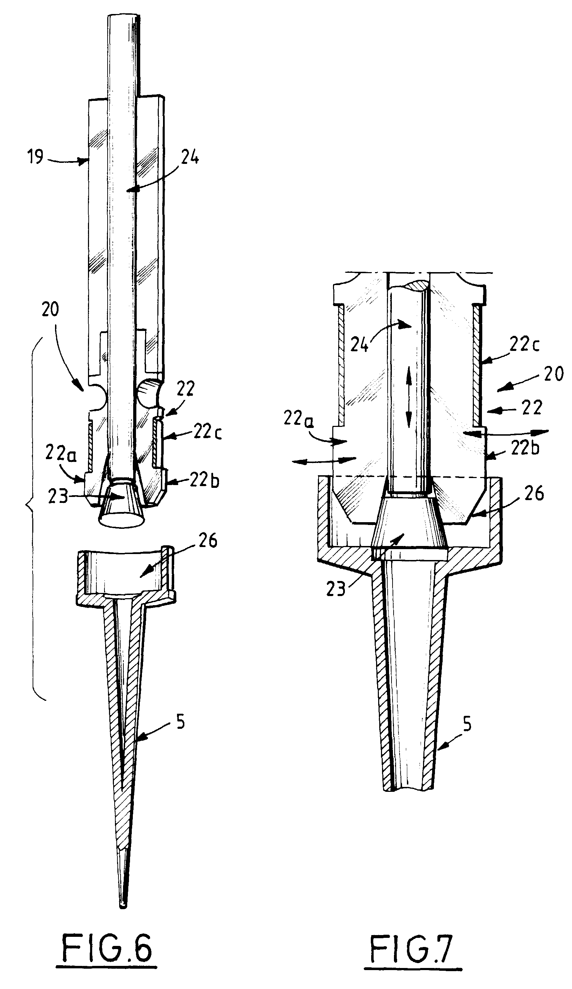

Cette opération (Fig.7) se poursuit tant que la tête d'expansion 23 du mandrin 22 n'est pas en appui contre la surface correspondante du piston 5.

En effet, lorsque cette tête vient en appui contre le piston, sa descente est arrêtée alors que celle du second organe tubulaire 19 se poursuit sous l'action du mécanisme à vis-écrou. Le mandrin 22 se positionne donc correctement dans l'évidement 26 du piston.

On conçoit alors que ceci provoque un déplacement relatif de la tige de manoeuvre 24 par rapport au second organe tubulaire 19, déplacement qui est détecté par les moyens de détection 25.

Ces moyens de détection provoquent alors la coupure de l'alimentation du moteur 31, ce qui arrête la descente du second organe tubulaire 19 et donc du mandrin 22 et l'excitation des seconds moyens de manoeuvre 21 qui provoquent la remontée de la tige de manoeuvre 24 dans le second organe tubulaire 19 et donc de la tête d'expansion 23 dans le mandrin expansible 22 pour permettre la saisie du piston 5 de seringue par ce mandrin.

Une fois ces différentes opérations effectuées, c'est à dire ces opérations de saisie du corps de seringue et de saisie du piston, le bras de support peut être soulevé pour dégager la seringue du logement correspondant du carrousel et déplacé en regard par exemple d'un flacon dans lequel est disposé un liquide qu'il y a lieu de pomper dans la seringue.

L'extrémité de la seringue est alors plongée dans ce liquide par descente du bras de support et le moteur à rotation continue 31 peut être activé dans le sens inverse de celui décrit précédemment pour assurer une remontée des seconds moyens de préhension dans les premiers moyens de préhension, c'est à dire une remontée du piston 5 dans le corps 3 de seringue afin d'assurer un pompage de liquide.

On conçoit en effet que ce moteur et le mécanisme à vis-écrou étant reversibles 5, la rotation de l'arbre de sortie de ce moteur dans un sens ou dans l'autre provoque une descente ou une remontée du second organe tubulaire dans le premier organe tubulaire, c'est à dire une descente ou une remontée des seconds moyens de préhension dans les premiers moyens de préhension et donc du piston dans le corps de seringue.

Une fois la quantité de liquide souhaitée pompée, l'alimentation du moteur 31 est coupée et le bras de support est remonté pour dégager la seringue du flacon et est déplacé pour être amené par exemple en regard d'une plaque de microtitration dans les cupules de laquelle il y a lieu de distribuer du liquide.

Une fois dans cette position, le moteur pas à pas 30 peut être activé pour distribuer de faibles quantités de liquide.

L'arbre de sortie de ce moteur provoque alors une rotation contrôlée pas à pas du premier organe tubulaire 8, c'est à dire une rotation contrôlée du corps de seringue 3 et par l'intermédiaire du mécanisme à vis-écrou 7, un déplacement en translation contrôlé du second organe tubulaire 19 et donc du piston 5, par rapport à ce premier organe tubulaire 8 et donc au corps de seringue 3.

On conçoit alors que l'on obtient simultanément un déplacement en rotation du corps de seringue 3 et un déplacement en translation du piston 5 de celle-ci, ce qui se traduit par un mouvement relatif hélicoïdal entre ces deux organes.

On a indiqué précédemment que ce mouvement relatif hélicoïdal permettait de résoudre différents problèmes, notamment de précision et d'à-coup de distribution de liquide.

Lorsque la distribution du liquide contenu dans la seringue saisie est terminée, le bras de support est ramené en regard du logement correspondant du carrousel pour permettre le dépôt de cette seringue dans celui-ci.

Une fois dans cette position, les seconds moyens de manoeuvre 21 sont relâchés, de sorte que la tige de manoeuvre 24 se déplace vers le bas dans le premier organe tubulaire 19 pour permettre la rétraction du mandrin expansible 22 et donc la libération du piston de seringue.

Les premiers moyens de manoeuvre 12 sont également activés de manière à permettre une libération du corps de seringue par écartement des mors 13 et 14 et le moteur à rotation continue est activé pour faire remonter les seconds moyens de préhension dans les premiers. Le bras de support est ensuite déplacé vers le haut et le dispositif est alors prêt pour une nouvelle opération.

On notera à cet égard que les moyens de préhension et en particulier les seconds moyens de préhension 4, doivent présenter à la fois une grande raideur en torsion et une souplesse élastique suffisante pour permettre le serrage et la bonne préhension du piston.

Il importe en effet que ce piston soit parfaitement bloqué en rotation pour que la distribution de liquide soit très précise, ce qui implique que ces moyens ne puissent se déformer en torsion afin que le déplacement linéaire du piston et par là le volume de liquide distribué, puissent être exactement proportionnels à l'angle de rotation du corps de seringue.

C'est ainsi que le mandrin expansible 22 peut comporter deux lèvres 22a et 22b diamétralement opposées et articulées à l'extrémité de la tige de manoeuvre et autour desquelles est disposé un organe élastique 22c de rappel du mandrin en position rétractée.

Ce dispositif de manipulation d'une seringue peut être intégré dans un automate d'analyse biologique ou dans d'autres mécanismes utilisant des seringues pour la distribution de liquide en particulier lorsque des volumes relativement faibles doivent être distribués avec une très bonne précision.

L'utilisation d'un mécanisme à vis-écrou interposé entre les moyens de préhension du corps de seringue et du piston permet d'obtenir un déplacement relatif hélicoïdal contrôlé entre le piston et le corps, ce déplacement relatif dépendant du pas du mécanisme à vis-écrou utilisé.

On conçoit que ce pas peut être adapté à la précision de distribution souhaitée.

Bien entendu, le dispositif selon l'invention peut être utilisé pour la manipulation d'une seringue dont le corps est en verre ou en matière plastique.

Enfin, il va de soi que le fonctionnement de l'ensemble de l'automate peut être piloté de façon classique par une unité de traitement d'informations à base de microprocesseur classique, comme cela est déjà connu dans l'état de la technique.

## Revendications

1. Dispositif de manipulation d'une seringue pour le pompage ou la distribution de liquide, notamment pour automate d'analyse biologique, dans lequel la seringue comporte un corps (3) et un piston (5) déplaçable dans le corps et le dispositif comporte des premiers moyens (2) de préhension du corps de la seringue, des seconds moyens (4) de préhension du piston de la seringue et des moyens de déplacement des moyens de préhension les uns par rapport aux autres pour amener le piston (5) à se déplacer dans le corps (3) de seringue, afin de pomper ou distribuer du liquide, lesdits moyens de déplacement étant formés par des moyens de déplacement du corps et du piston selon un mouvement relatif hélicoïdal, caractérisé en ce que les moyens de déplacement comprennent des moyens (6) d'entraînement en rotation des premiers moyens de préhension (2) et donc du corps (3) de seringue et des moyens d'entraînement en translation (7) des seconds moyens de préhension (4) et donc du piston (5) de seringue par rapport aux premiers moyens de préhension et donc au corps de seringue, en ce que les moyens d'entraînement en translation comprennent un mécanisme à vis-écrou (7)interposé entre les premiers (2) et seconds (4) moyens de préhension, en ce que les premiers moyens (2) de préhension du corps de seringue comprennent un premier organe tubulaire rotatif (8), à l'extrémité inférieure duquel sont prévus des premiers moyens de saisie (11) du corps (3) de seringue reliés à des premiers moyens de manoeuvre (12) et en ce que les seconds moyens de préhension (4) sont montés déplaçables en translation dans le premier organe tubulaire (8).

2. Dispositif selon la revendication 1, caractérisé en ce que les seconds moyens de préhension comprennent un second organe tubulaire (19) comportant à son extrémité inférieure des seconds moyens de saisie (20) du piston (5) de seringue, reliés à des seconds moyens de manoeuvre (21).

3. Dispositif selon la revendication 2, caractérisé en ce que les seconds moyens de saisie comprennent un mandrin (22) expansible sous l'action d'une tête d'expansion (23) prévue à l'extrémité inférieure d'une tige de manoeuvre (24), déplaçable dans le second organe tubulaire (19) et dont l'extrémité supérieure est reliée aux seconds moyens de manoeuvre (21).

4. Dispositif selon la revendication 3, caractérisé en ce qu'il comporte des moyens de détection (25) de la position des moyens de saisie (20) par rapport au piston (5) de la seringue pour contrôler le fonctionnement des seconds moyens de manoeuvre (21).

5. Dispositif selon la revendication 4, caractérisé en ce que le mandrin (22) est adapté pour s'engager dans un évidement (26) du piston (5) et est expansible dans celui-ci par remontée de la tête d'expansion (23) dans le mandrin sous le contrôle des seconds moyens de manoeuvre (21) et en ce que les moyens de détection (25) sont interposés entre l'extrémité supérieure de la tige de manoeuvre (24) et le second organe tubulaire (19) pour détecter la venue en butée de la tête d'expansion (23) contre le piston (5).

6. Dispositif selon l'une quelconque des revendications 1 et 2, 3, 4 ou 5, caractérisé en ce que le mécanisme à vis-écrou (7) de déplacement en translation des seconds moyens de préhension par rapport aux premiers, est interposé entre les premier (8) et second (19) organes tubulaires.

7. Dispositif selon la revendication 6, caractérisé en ce que l'écrou (27) du mécanisme à vis-écrou est solidaire du premier organe tubulaire (8) tandis que la surface externe du second organe tubulaire (19) est filetée.

8. Dispositif selon la revendication 6, caractérisé en ce que l'écrou du mécanisme à vis-écrou est solidaire du second organe tubulaire (19), tandis que la surface interne du premier organe tubulaire (8) est taraudée.

9. Dispositif selon l'une quelconque des revendications 1 à 8, caractérisé en ce que les moyens d'entraînement (6) en rotation des premiers moyens de préhension (2) comprennent au moins un moteur électrique réversible (30, 31) dont l'arbre de sortie est relié aux premiers moyens de préhension (2) par des moyens de transmission.

10. Dispositif selon la revendication 9, caractérisé en ce que les moyens de transmission comprennent au moins une courroie (28) associée à l'arbre de sortie du ou de chaque moteur et à une couronne (29) d'entraînement des premiers moyens de préhension (2).

11. Dispositif selon la revendication 9 ou 10, caractérisé en ce que les moyens d'entraînement en rotation des premiers moyens de préhension comprennent deux moteurs électriques (30, 31) associés aux premiers moyens de préhension (2), dont l'un (31) est un moteur à rotation continue de déplacement rapide des moyens de préhension, activé en phase d'approche ou d'écartement des seconds moyens (20) de préhension du piston de la seringue et dont l'autre (30) est un moteur pas à pas activé en phase de déplacement du piston (5) par les seconds moyens de préhension (20).

12. Automate d'analyse biologique caractérisé en ce qu'il comporte un dispositif de manipulation selon l'une quelconque des revendications précédentes.

## Patentansprüche

1. Vorrichtung zur Handhabung einer Spritze zum Pumpen oder Verteilen von Flüssigkeit, insbesondere für einen biologischen Analyseautomaten, wobei die Spritze einen Körper (3) und einen in dem Körper verschiebbaren Kolben (5) aufweist und die Vorrichtung erste Haltemittel (2) für den Körper der Spritze, zweite Haltemittel (4) für den Kolben der Spritze und Mittel zum Verschieben der Haltemittel relativ zueinander aufweist, um den Kolben (5) zu veranlassen, sich in dem Körper (3) der Spritze zu bewegen, damit Flüssigkeit gepumpt oder ausgegeben wird, wobei die genannten Verschiebemittel durch Mittel zum Verschieben des Körpers und des Kolbens in einer schraubenförmigen Relativbewegung gebildet werden, dadurch **gekennzeichnet**, daß die Verschiebemittel Drehantriebsmittel (6) für die ersten Haltemittel (2) und somit für den Körper (3) der Spritze und Mittel (7) zum Translationsantrieb der zweiten Haltemittel (4) und somit des Kolbens (5) der Spritze relativ zu den ersten Haltmitteln und somit zum Körper der Spritze aufweisen, daß die Drehantriebsmittel einen zwischen den ersten (2) und zweiten Haltemitteln (4) eingefügten Spindelmechanismus (7) aufweisen, daß die ersten Haltemittel (2) für den Körper der Spritze ein drehbares erstes rohrförmiges Organ (8) aufweisen, an dessen unterem Ende erste Greifmittel (11) für den Körper (3) der Spritze angeordnet sind, die mit ersten Steuermitteln (12) verbunden sind, und daß die zweiten Haltemittel (4) translationsbeweglich in dem ersten rohrförmigen Organ (8) montiert sind.

2. Vorrichtung nach Anspruch 1, dadurch **gekennzeichnet**, daß die zweiten Haltemittel ein zweites rohrförmiges Organ (19) aufweisen, das an seinem unteren Ende zweite Greifmittel (20) für den Kolben (5) der Spritze hat, die mit zweiten Steuermitteln (21) verbunden sind.

3. Vorrichtung nach Anspruch 2, dadurch **gekennzeichnet**, daß die zweiten Greifmittel einen Dorn (22) aufweisen, der spreizbar ist unter der Wirkung eines Spreizkopfes (23), der am unteren Ende einer Steuerstange (24) vorgesehen ist, die in dem zweiten rohrförmigen Organ (19) verschiebbar ist und deren oberes Ende mit den zweiten Steuermitteln (21) verbunden ist.

4. Vorrichtung nach Anspruch 3, dadurch **gekennzeichnet**, daß sie Detektormittel (25) zum Erfassen der Position der Greifmittel (20) in bezug auf den Kolben (5) der Spritze aufweist, um die Funktion der zweiten Steuermittel (21) zu kontrollieren.

5. Vorrichtung nach Anspruch 4, dadurch **gekennzeichnet**, daß der Dorn (22) dazu ausgebildet ist, in eine Ausnehmung (26) des Kolbens (5) einzugreifen, und in dieser Ausnehmung spreizbar ist, durch den Hub des Spreizkopfes (23) in dem Dorn unter Steuerung der zweiten Steuermittel (21), und daß die Detektormittel (25) zwischen dem oberen Ende der Steuerstange (24) und dem zweiten rohrförmigen Organ (19) angeordnet sind, um zu erfassen, wenn der Spreizkopf (23) an dem Kolben (5) anschlägt.

6. Vorrichtung nach einem der Ansprüche 1 und 2, 3, 4 oder 5, dadurch **gekennzeichnet**, daß der Spindelmechanismus (7) für die Translationsbewegung der zweiten Haltemittel in bezug auf die ersten Haltemittel zwischen den ersten (8) und zweiten rohrförmigen Organen (19) eingefügt ist.

7. Vorrichtung nach Anspruch 6, dadurch **gekennzeichnet**, daß die Mutter (27) des Spindelmechanismus mit dem ersten rohrförmigen Organ (8) verbunden ist, während die äußere Oberfläche des zweiten rohrförmigen Organs (19) mit Gewinde versehen ist.

8. Vorrichtung nach Anspruch 6, dadurch **gekennzeichnet**, daß die Mutter des Spindelmechanismus mit dem zweiten rohrförmigen Organ (19) verbunden ist, während die innere Oberfläche des ersten rohrförmigen Organs (8) mit Innengewinde versehen ist.

9. Vorrichtung nach einem der Ansprüche 1 bis 8, dadurch **gekennzeichnet**, daß die Drehantriebsmittel (6) für die ersten Haltemittel (2) wenigstens einen reversierbaren Elektromotor (30,31) aufweisen, dessen Ausgangswelle über Kraftübertragungsmittel mit den ersten Haltemitteln (2) verbunden ist.

10. Vorrichtung nach Anspruch 9, dadurch **gekennzeichnet**, daß die Kraftübertragungsmittel wenigstens einen Treibriemen (28) aufweisen, der mit der Ausgangswelle des oder jedes Motors und mit einem Zahnrad (29) für den Antrieb der ersten Haltemittel (2) verbunden ist.

11. Vorrichtung nach Anspruch 9 oder 10, dadurch **gekennzeichnet**, daß die Drehantriebsmittel für die ersten Haltemittel zwei Elektromotoren (30,31) aufweisen, die den ersten Haltemitteln (2) zugeordnet sind und von denen einer (31) ein kontinuierlich laufender Motor für die Schnellverstellung der Haltemittel ist, der in der Phase der Annäherung oder des Abrückens der zweiten Haltemittel (20) an den bzw. von dem Kolben der Spritze aktiviert wird, und von denen der andere (30) ein Schrittmotor ist, der in der Phase der Verschiebung des Kolbens (5) mit Hilfe der zweiten Haltemittel (20) aktiviert wird.

12. Biologischer Analyseautomat, dadurch **gekennzeichnet**, daß er eine Handhabungsvorrichtung nach einem der vorstehenden Ansprüche aufweist.

## Claims

1. Device for manipulating a syringe for the pumping or distribution of liquid, notably for an automatic biological analyser, wherein the syringe comprises a body (3) and a piston (5) which is movable in the body and the device comprises first means (2) for gripping the body of the syringe, second means (4) for gripping the piston of the syringe and means for displacing the gripping means relative to one another in order to cause the piston (5) to move within the syringe body (3), in order to pump or distribute the liquid, said displacing means being formed by means for displacing the body and the piston in a relative helical movement, characterised in that the displacement means comprise means (6) for rotationally driving the first gripping means (2) and hence the syringe body (3) and means (7) for translationally driving the second gripping means (4) and hence the syringe piston (5) relative to the first gripping means and hence the syringe body, in that the rotational driving means comprise a nut-and-bolt assembly (7) interposed between the first (2) and second (4) gripping means, in that the first means (2) for gripping the syringe body comprise a first rotary tubular member (8), at the lower end of which are provided first means (11) for seizing the syringe body (3) which are connected to first manoeuvring means (12) and in that the second gripping means (4) are mounted so as to be translationally movable in the first tubular member (8).

2. Device according to claim 1, characterised in that the second gripping means comprise a second tubular member (19) comprising, at its lower end, second means (20) for seizing the syringe piston (5), which are connected to second manoeuvring means (21).

3. Device according to claim 2, characterised in that the second seizing means comprise a mandrel (22) which is expandable under the action of an expansion head (23) provided at the lower end of a manoeuvring rod (24), which is movable in the second tubular member (19) and the upper end of which is connected to the second manoeuvring means (21).

4. Device according to claim 3, characterised in that it comprises means (25) for detecting the position of the seizing means (20) relative to the piston (5) of the syringe in order to monitor the operation of the second manoeuvring means (21).

5. Device according to claim 4, characterised in that the mandrel (22) is adapted to engage in a recess (26) in the piston (5) and is expandable therein by raising the expansion head (23) in the mandrel under the control of the second manoeuvring means (21) and in that the detecting means (25) are interposed between the upper end of the manoeuvring rod (24) and the second tubular member (19) in order to detect the expansion head (23) coming to abut on the piston (6).

6. Device according to any one of claims 1 and 2, 3, 4 or 5, characterised in that the nut-and-bolt assembly (7) for moving the second gripping means in translation relative to the first is interposed between the first (8) and second (19) tubular members.

7. Device according to claim 6, characterised in that the nut (27) of the nut-and-bolt assembly is firmly attached to the first tubular member (8) whereas the outer surface of the second tubular member (19) is threaded.

8. Device according to claim 6, characterised in that the nut of the nut-and-bolt assembly is firmly attached to the second tubular member (19) whereas the inner surface of the first tubular member (8) is tapped.

9. Device according to any one of claims 1 to 8, characterised in that the means (6) for rotationally driving the first gripping means (2) comprise at least one reversible electric motor (30, 31) the output shaft of which is connected to the first gripping means (2) by transmission means.

10. Device according to claim 9, characterised in that the transmission means comprise at least one belt (28) associated with the output shaft of the or each motor and with a rim (29) for driving the first gripping means (2).

11. Device according to claim 9 or 10, characterised in that the means for rotationally driving the first gripping means comprise two electric motors (30, 31) associated with the first gripping means (2), one (31) of which is a continuous rotation motor for rapidly moving the gripping means, activated as the second gripping means (20) move towards or away from the piston of the syringe, the other (30) being a stepping motor which is activated as the piston (5) is displaced by the second gripping means (20).

12. Automatic biological analyser, characterised in that it comprises a manipulating device according to any one of the preceding claims.
